# EUROPEAN PATENT APPLICATION

(11) **EP 0 531 560 A1**
(43) Date of publication of application: **17.03.1993**
(21) Application number: 91115279.1
(22) Date of filing: 10.09.1991
(51) Int. Cl.: B62B 3/06

(54) **Pallet lifters**

(71) Applicant: Lee, Seung-Choon, Yangsan-Koon, Kyungsangnam-Do (KR)
(72) Inventor: Lee, Seung-Choon, Yangsan-Koon, Kyungsangnam-Do (KR)
(74) Representative: Sajda, Wolf E., Dipl.-Phys.

(57) **Abstract**

A pallet lifter comprising a tank (3) containing hydraulic oil therein, a pump (4) for pumping the hydraulic oil from the tank (3), a hydraulic cylinder (5) having a piston rod (5a) and receiving hydraulic oil supplied from the tank (3), by the pumping action of the pump (4), and an initial wheel driving mechanism (2) disposed between and operatively connected to a pair of spaced wheels (1) rotatably mounted to the lower end of the pallet lifter. The initial wheel driving mechanism (2) is actuated by hydraulic oil supplied from the hydraulic cylinder (5). The lifter also comprises a control mechanism adapted to control the operation of the initial wheel driving mechanism (2) and the operation of the hydraulic cylinder (5). The control of the control mechanism is performed by opening check valves disposed in oil paths and normally maintained at their closed states. By the initial wheel driving mechanism (2), an initial wheel driving force can be easily generated so that a load which may be loaded on a pallet can be easily and simply carried to a desired place.

## Description

### BACKGROUND OF THE INVENTION

### Field of the Invention

The present invention relates to pallet lifters, and more particularly to pallet lifters which can load loads thereon, carry it, and then unload it therefrom.

### Description of the Prior Art

Conventionally, fork lifts or pallet carrying machines have been mainly used, for the purpose of loading, carrying and unloading pallets on which loads are loaded. Most of these machines are of vehicle types equipped with engines, thereby causing the weight to be heavy and the manufacture cost to be expensive. As a result, they are unsuitable to use as compact carrying machines which can be driven only by a manual force. Due to the bulky size, they can not be used in narrow storehouses or at confined places.

There have been proposed pallet lifters which can be manually driven, in the Korean Utility Model Publication Nos. 84-1992, 83-2601, and 88-447. The Korean Utility Model Publication No. 84-1992 discloses a pallet lifter wherein only by a manual force, loads are lifted to a desired level and then carried to a desired place. In cases of the Korean Utility Model Publication Nos. 83-2601 and 88-447, the loads can be lifted to a certain level by using a hydraulic cylinder. However, these machines can be used effectively only by strong power persons, since very large initial wheel driving force is required for moving the lifter carrying the loads to a desired place.

### SUMMARY OF THE INVENTION

Therefore, an object of the invention is to overcome the disadvantages encountered in the prior arts and to provide a pallet lifter which is capable of being compact, easily and simply lifting loads, and requiring only small initial wheel driving force.

Another object of the invention is to provide a pallet lifter having a simple and compact construction so that it can be used at any places and particularly at confined places.

A further object of the invention is to provide a pallet lifter which can stably and conveniently carry and unload loads, irrespective of the shapes of loads.

For accomplishing these objects, the present invention provides a pallet lifter comprising a base frame, forks supported to said base frame by means of a link mechanism to move vertically, and a pair of wheels rotatably mounted to the base frame, said lifter further comprising: a tank containing hydraulic oil therein; a hydraulic cylinder having a vertically reciprocating piston rod to move vertically said forks and communicating with said tank via a first oil path to be actuated by hydraulic pressure generated by the hydraulic oil supplied from the tank; a pump disposed in said first oil path between the tank and said hydraulic cylinder and adapted to pump hydraulic oil from the tank to the hydraulic cylinder so as to move upwardly the forks; means adapted to actuate said pump; means adapted to release the hydraulic pressure acting on the hydraulic cylinder so as to move downwardly the forks; means adapted to apply an initial driving force to said wheels and actuated by hydraulic pressure generated by the hydraulic oil supplied from the hydraulic cylinder via a second oil path in which a first control valve normally maintained at its closed position is disposed; means adapted to release the hydraulic pressure acting on said initial wheel driving means; means adapted to control the operation of said initial wheel driving means by selectively opening said first control valve; and means adapted to control the operation of the hydraulic cylinder.

In accordance with the present invention, the means for releasing the hydraulic pressure acting on the hydraulic cylinder comprises a third oil path extending from the hydraulic cylinder to the tank and a second control valve which is normally maintained at its closed position and opened under the control of the means adapted to control the operation of the hydraulic cylinder. The means for releasing the hydraulic pressure acting on the initial wheel driving means comprises an oil path extending from the initial wheel driving means to the tank.

In accordance with the present invention, the initial wheel driving means comprises: a frame having a vertical hollow upper portion supported to the base frame of the lifter and a horizontal hollow lower portion defining an inner space provided at one end with a bushing hole; a bushing fitted in the bushing hole of the frame and formed at its outer surface with an annular oil groove communicating with the second oil path; a main gear mounted to the middle portion of the shaft of the wheels within the inner space of the frame, the main gear rotating together with the wheel shaft only in its one rotating direction; a return gear rotatably mounted to a separate shaft which is fixedly mounted at its both ends to both sides of the frame, within the inner space of the frame; a rack member slidably disposed in the inner space of the frame and having a drive rack selectively engagable with the main gear and a return rack engaged with the return gear; a plunger disposed in the bushing and connected with the rack member, the plunger being actuated by hydraulic pressure generated by the hydraulic oil supplied from the hydraulic cylinder via the second oil path and the annular oil groove of the bushing, so as to slide in the bushing and thus move the rack in the direction corresponding to the one rotating direction of the main gear and applying the initial driving force to the wheels; and a pair of torsion coil springs arranged at both sides of the return gear and adapted to return the rack member by rotating reversely the return gear, in releasing of the hydraulic pressure acting on the plunger.

The first and second control valves are check valves each comprising a ball and a compression coil spring urging the ball in the valve closing direction and disposed in a jack plate to which the tank, the pump and the hydraulic cylinder are supported.

In accordance with the present invention, the means for controlling the operation of initial wheel driving means comprises: an actuating rod slidably disposed in the jack plate such that its inner end faces to the ball of the first control valve to push it for opening the first control valve and its outer end is protruded beyond the support plate; a swing arm rotatably mounted to a shaft fixedly mounted to the jack plate and having a substantially horizontal arm portion and a substantially vertical arm portion provided with a length adjustable contact member which contacts and pushes the protruded outer end of the actuating rod according to the rotation of swing arm; a lever connected to the horizontal arm portion of the swing arm by means of a chain and adapted to rotate the swing arm in the direction of pushing the actuating rod; and a return spring adapted to return the pushed actuating rod to its original position.

The means for controlling the operation of hydraulic cylinder comprises: an actuating rod slidably disposed in the jack plate such that its inner end faces to the ball of the second control valve to push it for opening the second control valve and its outer end is protruded beyond the support plate; a swing arm rotatably mounted to a shaft fixedly mounted to the jack plate and having a substantially horizontal arm portion and a substantially vertical arm portion provided with a length adjustable contact member which contacts and pushes the protruded outer end of the actuating rod according to the rotation of swing arm; a foot pedal connected to the horizontal arm portion of the swing arm and adapted to rotate the swing arm in the direction of pushing the actuating rod; and a return spring adapted to return the pushed actuating rod to its original position.

In accordance with the present invention, the means for actuating the pump comprises: a handle pivotally mounted at its lower end to the tank by means of a bracket which is mounted to the outer wall of the tank to pivot about a pivot and fixed to the lower end of the handle; and a roller rotatably mounted to the bracket such that it is in contact with an actuating rod protruded from the pump, whereby as the handle is swung, the actuating rod is reciprocated vertically by the roller, thereby causing the pump to operate for pumping hydraulic oil from the tank.

The first, second and third oil paths are formed through the jacket plate.

### BRIEF DESCRIPTION OF THE DRAWINGS

The present invention will now be shown and described with reference to the preferred embodiment thereof, and with reference to the illustrative drawings. It should be clearly understood, however, that the description of the embodiment, and the drawings, are all of them given purely for the purposes of explanation and exemplification only, and are none of them intended to be limitative of the scope of the present invention in any way , since the scope of the present invention is to be defined solely by the legitimate and proper scope of the appended claims. In the drawings, like parts and features are denoted by like reference symbols in various figures thereof, and:
FIG. 1 is a sectional view of a pallet lifter in accordance with the present invention;
FIG. 2 is a cross-sectional view taken along the line A-A of FIG. 1;
FIG. 3 is a cross-sectional view taken along the line B-B of FIG. 1;
FIG. 4 is a cross-sectional view taken along the line C-C of FIG. 1;
FIG. 5 is a cross-sectional view taken along the line D-D of FIG. 1;
FIG. 6 is a partial sectional view of a second control mechanism in accordance with the present invention;
FIG. 7 is a partial sectional view of a first control mechanism in accordance with the present invention; and
FIG. 8 is a perspective view of the pallet lifter according to the present invention, showing the condition that forks are maintained at their lifted positions.

### DETAILED DESCRIPTION OF THE PREFERRED EMBODIMENT

Referring to the drawings, there is shown a pallet lifter in accordance with the present invention. The pallet lifter comprises an initial wheel driving mechanism 2 disposed between a pair of spaced wheels 1 rotatably mounted to the lower end of the pallet lifter, a tank 3 containing hydraulic oil therein, a pump 4 for pumping the hydraulic oil from the tank 3, a hydraulic cylinder 5 having a piston rod 5a and receiving the hydraulic oil supplied from the tank 3, by the pumping action of the pump 4, a jack plate 6 adapted to support the tank 3 and the pump 4 thereon and having a plurality of oil passages therein, and a control mechanism 7 supported to the jack plate 6 and adapted to control the operation of the initial wheel driving mechanism 2 and the operation of the hydraulic cylinder 5.

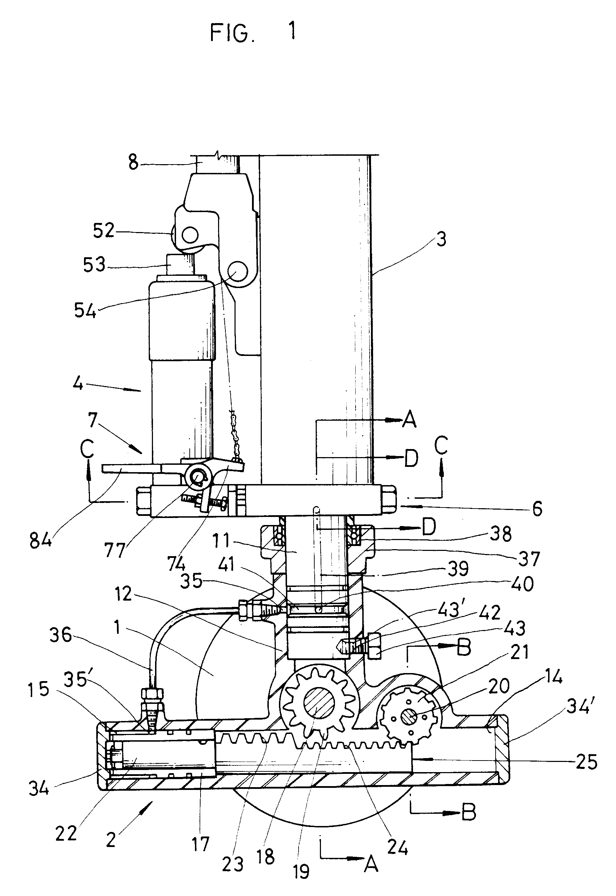

The initial wheel driving mechanism 2 which is shown in detail in FIGS. 1 to 3 comprises a frame 12 having a vertical hollow upper portion receiving a main shaft 11 fixedly mounted to the lower end of the jack plate 6 described hereinafter and a horizontal hollow lower portion defining an inner space 14. At one end of the inner space 14 of frame 12, a bushing hole 13 is provided, in which a bushing 17 formed at its outer surface with an annular oil groove 15 is fitted. Within the inner space 14, the initial wheel driving mechanism 2 also comprises a main gear 19 rotatably mounted to the middle portion of a common shaft 18 of the wheels 1, a return gear 21 rotatably mounted to a separate shaft which is fixedly mounted at its both ends to both sides of the frame 12, although not shown, a rack member 25 slidably disposed in the space 14 and having a drive rack 23 selectively engagable with said main gear 19 and a return rack 24 engaged with said return gear 21, and a plunger 22 closely disposed in the bushing 17 and integrally formed with said rack member 25, said plunger being operated by a hydraulic pressure to slide in the bushing 17 and thus move the rack 25.

As shown in FIG. 1, the rack 23 and the rack 24 of rack member 25 are stepwise formed. That is, the rack 24 is formed at the level lower than that of the rack 23 so that it can not engage with the main gear 19 during the sliding movement of rack member 25.

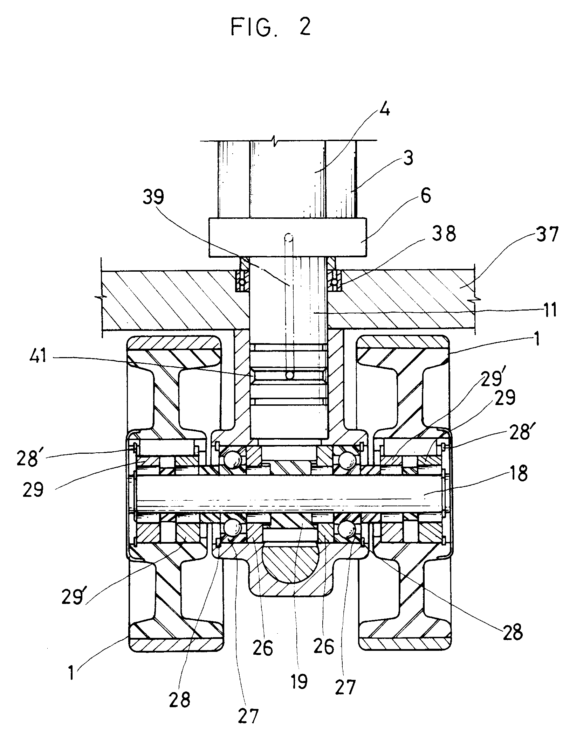

As shown in FIG. 2, a pair of backstop bearings 26 are fitted around the shaft 18 at both sides of the main gear 19, respectively. The backstop bearings 26 function to transmit the drive force of the main gear 19 caused by the advancing movement of the rack member 25 to the shaft 18, as well as to prevent the shaft 18 from being reversely rotated during the reverse rotation of the main gear 19 caused by the return movement of the rack member 25. At respective outer sides of both backstop bearings 26, a pair of ball bearings 27 are fitted around the shaft 18. These backstop bearings 26 and ball bearings 27 are prevented from sliding axially, by snap rings 28 which are mounted to the frame 12 at respective outer sides of both ball bearings 27. A pair of another spaced backstop bearings 29 and 29' are interposed between the boss portion of each wheel 1 and the shaft 18. The backstop bearings 29 and 29' function to transmit the drive force of the shaft 18 caused by the advancing movement of the rack member 25 to the wheels 1, as well as to prevent the shaft 18 from being reversely rotated during the reverse rotation of the wheels 1. These backstop bearings 29 and 29' are also prevented from sliding axially, by snap rings 28' which are mounted to the boss portion of the wheel 1 at respective outer sides of both backstop bearings 29 and 29'.

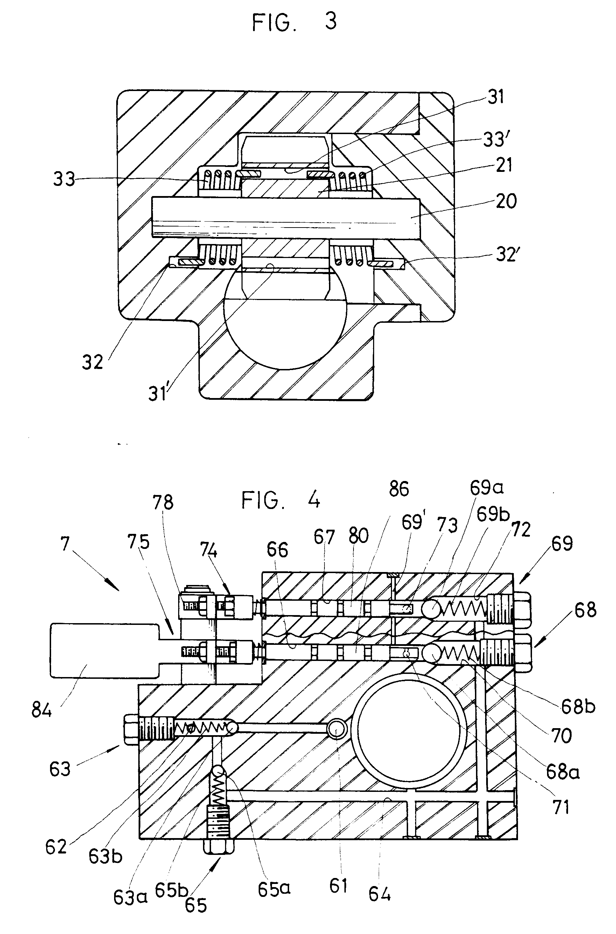

In order to provide a return force for forcing the rack member 25 to return to its original position at which the rack 23 disengages from the main gear 19 as shown in FIG. 1, a pair of torsion coil springs 33 and 33' are disposed at both sides of the return gear 21, respectively, as shown in FIG. 3. The torsion coil spring 33 has both ends fitted in a hole 32 formed at the frame 12 and a hole 31 formed throughout the return gear 21. Similarly, the torsion coil spring 33' has both ends fitted in a hole 32' formed at the frame 12 and one end of the hole 31 of the return gear 21. The return gear 21 may have a separate throughout hole 31' which is similar to the throughout hole 31 and may fit ends of the torsion coil springs 33 and 33'. This throughout hole 31' may be utilized in the case that the torque of the torsion coil springs 33 and 33' is desired to be varied.

The inner space 14 of the frame 12 is closed by a pair of covers 34 and 34' fitted in respective ends of the frame 12.

Oil ports 35 and 35' are formed at the upper portion and the lower portion of the frame 12, respectively. In particular, the oil port 35' are communicated with the bushing hole 13 so that a hydraulic oil can be applied to a space defined between the inner surface of the bushing 17 and the end surface of the plunger 22 via the annular oil groove 15, thereby causing a hydraulic pressure to be applied to the plunger 22, so as to slide the rack member 25 connected to the plunger 22.

Oil ports 35 and 35' are communicated with each other, by means of a pipe 36 so that the oil port 35' can receive the hydraulic oil from the oil port 35 and discharge again it to the oil port 35.

The main shaft 11 which is received in the upper portion of the frame 12 and fixedly mounted to the lower end of the jack plate 6 has a central oil passage 39 extending vertically through the center of the main shaft 11, an oil passage 40 extending horizontally and radially from the lower end of the central oil passage 39 through the main shaft 11 to communicate with the central oil passage 39, and an outer oil passage 41 formed around the outer surface of the main shaft 11 to communicate with the oil passage 40 and the oil port 35 formed at the frame 12. Above the upper portion of the frame 12, a bearing housing 37 is fitted around the main shaft 11. A bearing 38 is interposed between the inner surface of the bearing housing 37 and the outer surface of the main shaft 11. The fixing of main shaft 11 to the frame 12 is accomplished by a set screw 43 which is threaded, through a hole 42 formed at the frame 12, into a radial hole 43' formed at the main shaft 11, as shown in FIG. 1.

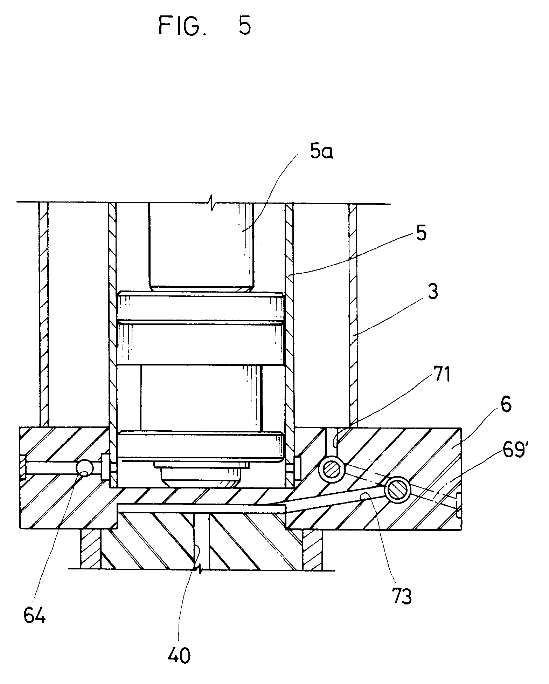

As shown in FIGS. 1, 2, 4 and 5, the jack plate 6 supports the tank 3 and the pump 4 thereon and has oil passages 61 and 62 communicating with the tank 3 and the pump 4, respectively. A check valve 63 which comprises a ball 63a and a compression coil spring 63b is disposed between the oil passage 61 and the oil passage 62, so as to avoid hydraulic oil from flowing from the oil passage 62 to the oil passage 61, as shown in FIG. 4. On the other hand, the flow of hydraulic oil from the tank 3 via the oil passage 61 and the oil passage 62 to the pump 4 is permitted in that the hydraulic pressure of the oil urges the ball against the spring force of the coil spring 63b in the direction of opening the check valve 63.

The jack plate 6 also has an oil passage 64 which communicates the oil passage 62 with the interior of the hydraulic cylinder 5 in the tank 3. A check valve 65 which comprises a ball 65a and a compression coil spring 65b is also disposed between the oil passage 62 and the oil passage 64, so as to prevent hydraulic oil from the hydraulic cylinder 5 from flowing through the oil passage 64 to the oil passage 62. In similar to the check valve 63, the flow of hydraulic oil from the oil passage 62 to the oil passage 64 is permitted in that the hydraulic pressure of the oil urges the ball against the spring force of the coil spring 65b in the direction of opening the check valve 65. That is, the hydraulic oil from the pump 4 which has been pumped from the tank 3 via oil passages 61 and 62 by the pumping operation of the pump 4 can be supplied to the hydraulic cylinder 5 via oil passage 62 and 64, thereby causing the piston rod 5a to be raised, as will be described hereinafter.

The jack plate 6 also includes another oil passages 71 and 73 which communicates with the oil passage 64 commonly and with the tank 3 and the central oil passage 39 of the main shaft 11 respectively. The oil passages 71 and 73 also communicates with each other by an oil passage 69', as shown in FIG. 4, Between the oil passage 71 and the oil passage 64, a check valve 68 which comprises a ball 68a and a compression coil spring 68b is also disposed in an oil passage 70, so as to prevent hydraulic oil from the hydraulic cylinder 5 from flowing through the oil passage 64 to the oil passage 71. A check valve 69 which comprises a ball 69a and a compression coil spring 69b is also disposed in an oil passage 72 formed between the oil passage 73 and the oil passage 64, so as to prevent hydraulic oil from the hydraulic cylinder 5 from flowing through the oil passage 64 to the oil passage 73.

The control mechanism 7 which is adapted to control the operation of the initial wheel driving mechanism 2 and the operation of the hydraulic cylinder 5 is provided at the jack plate 6. As shown in FIGS. 1, 4, 6 and 7, the control mechanism 7 comprises a first control mechanism 74 adapted to actuate the initial wheel driving mechanism 2 and a second control mechanism 75 adapted to move downwardly the piston rod 5a of the hydraulic cylinder 5.

As shown in FIGS. 1, 4, 7, and 8, the first control mechanism 74 comprises an actuating rod 80 slidably received in a hole 67 which is perforated from the side of the jack plate 6 opposite to the oil passage 72 containing the check valve 69, through the jack plate 6 and aligned with the oil passage 72 so that the inner end of the actuating rod 80 can contact the ball 69a of the check valve 69. In order to avoid the leakage of hydraulic oil through the gap formed between the inner surface of the hole 67 and the outer surface of the actuating rod 80, a plurality of spaced O-rings are disposed around the actuating rod 80, even though not shown in the drawings. The actuating rod 80 has at its outer end a smaller diameter portion around which a compression coil spring 81 is disposed, as shown in FIG. 7. At the outer end of the hole 67, a snap ring 82 is fixedly mounted which functions to prevent the actuating rod 80 from being separated from the hole 67. The compression coil spring 81 functions to urge the actuating rod 80 in the direction that the inner end of the actuating rod 80 is away from the ball 69a of the check valve 69.

The first control mechanism 74 also comprises a swing arm 78 rotatably mounted to a shaft 77 which is fixedly mounted to the jack plate 6. The swing arm 78 has a substantially horizontal arm portion and a substantially vertical arm portion. The horizontal arm portion is connected with a lever 9 by means of a chain 76. The lever 9 is mounted to a handle 8 which comprises a vertical portion formed of a pipe and a handle portion. That is, the lever 9 is received at its lower end in the vertical portion of the handle 8, so as to be vertically movable. The chain 76 is also extended through the vertical portion of the handle 8. The vertical arm portion of the swing arm 78 is disposed to face to the outer end of the actuating rod 80 and provided with an adjustable contact member 79 which is contactable with the outer end of the actuating rod 80. The adjustable contact member 79 formed of a bolt is threadedly coupled to the vertical arm portion of the swing arm 78 to adjust the protruded length thereof. In order to fix the adjustable contact member 79 with respect to the vertical arm portion of the swing arm 78, a nut 83 is coupled to the adjustable contact member 79. By the above-mentioned construction, as the lever 9 is pulled up, the horizontal arm portion of the swing arm 78 is lifted upwardly, thereby causing the swing arm 78 to rotate about the shaft 77. Accordingly, the adjustable contact member 79 of the vertical portion of the swing arm 78 contacts and pushes the actuating rod 80 inwardly of the hole 67 so that the inner end of the actuating rod 80 pushes the ball 69a against the spring force of the compression coil spring 69b, thereby enabling the fluid communication between oil passages 64 and 73 via the oil passage 72.

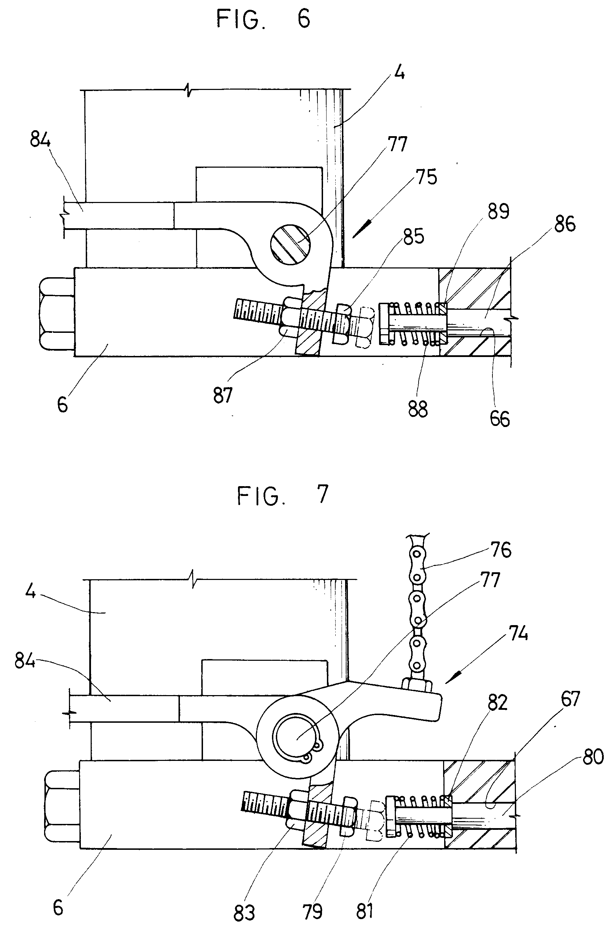

In similar to the first control mechanism 74, the second control mechanism 75 comprises an actuating rod 86 slidably received in a hole 66 which is perforated from the side of the jack plate 6 opposite to the oil passage 72 containing the check valve 69, through the jack plate 6 and aligned with the oil passage 72 so that the inner end of the actuating rod 80 can contact the ball 69a of the check valve 69, as shown in FIGS. 1, 4, 6, and 8. In order to avoid the leakage of hydraulic oil through the gap formed between the inner surface of the hole 66 and the outer surface of the actuating rod 86, a plurality of spaced O-rings are also disposed around the actuating rod 86, even though not shown in the drawings. In similar to the actuating rod 80, the actuating rod 86 has at its outer end a smaller diameter portion around which a compression coil spring 88 is disposed, as shown in FIG. 6. At the outer end of the hole 66, a snap ring 89 is fixedly mounted which functions to prevent the actuating rod 86 from being separated from the hole 66. The compression coil spring 88 functions to urge the actuating rod 86 in the direction that the inner end of the actuating rod 86 is away from the ball 68a of the check valve 68.

The second control mechanism 75 also comprises a swing arm 84 rotatably mounted to the shaft 77 to which the swing arm 78 of the first control mechanism 74 is rotatably mounted. The swing arm 84 has a substantially horizontal arm portion and a substantially vertical arm portion. The horizontal arm portion of the swing arm 84 has an extension functioning as a foot plat. The vertical arm portion of the swing arm 84 is disposed to face to the outer end of the actuating rod 86 and provided with an adjustable contact member 85 which is contactable with the outer end of the actuating rod 86. The adjustable contact member 85 formed of a bolt is threadedly coupled to the vertical arm portion of the swing arm 84 to adjust the protruded length thereof. In order to fix the adjustable contact member 85 with respect to the vertical arm portion of the swing arm 84, a nut 87 is coupled to the adjustable contact member 85. By the above-mentioned construction, as the foot pedal of the swing arm 84 is depressed, the swing arm 84 rotates about the shaft 77. Accordingly, the adjustable contact member 85 of the vertical portion of the swing arm 84 contacts and pushes the actuating rod 86 inwardly of the hole 66 so that the inner end of the actuating rod 86 pushes the ball 68a against the spring force of the compression coil spring 68b, thereby enabling the fluid communication between oil passages 64 and 71 via the oil passage 70.

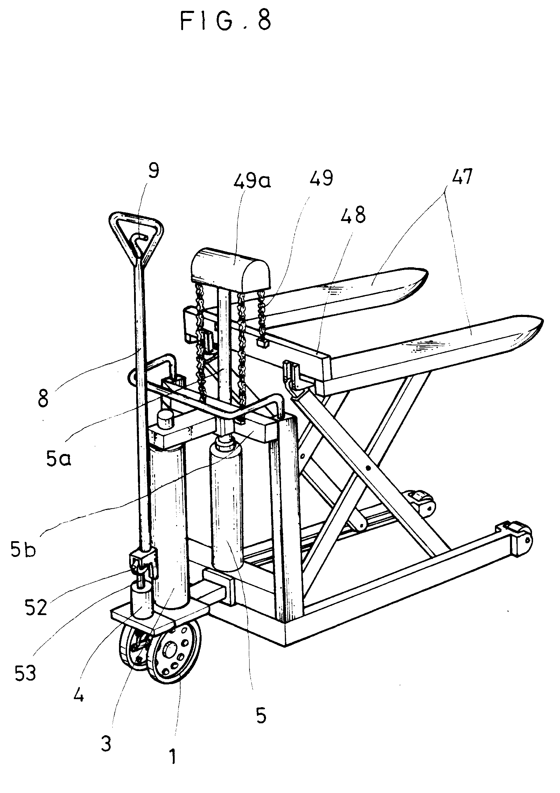

FIG. 8 shows a manually operated pallet lifter with the above-mentioned constructions according to the present invention.

From the hydraulic cylinder 5 disposed in the tank 3 which is supported on the jack plate 6, the piston rod 5a is protruded upwardly. Although not shown, a sprocket wheel is rotatably mounted to the upper end of the piston rod 5a within a cover 49a. Over the sprocket wheel, a chain 49 is disposed to engage therewith. Both ends of the chain 49 are connected to an upper bracket 5b fixed to a base frame of the lifter and a support member 48 for supporting forks 47 on which a pallet will be loaded, respectively. The forks 47 are supported to the base frame of the lifter by means of a conventional link mechanism, so as to move upwardly and downwardly. By the above-mentioned construction, as the piston rod 5a moves upwardly and downwardly, the forks is lifted and lowered, by virtue of the force transmission accomplished by the sprocket wheel and the chain 49. This operation is well-known in the technical field to which the present invention pertains. Accordingly, detailed description thereof is omitted.

As shown in FIG. 8, the handle 8 is pivotally mounted at its lower end to the tank 3 by means of a bracket mounted to the outer wall of the tank 3 to pivot about a pivot 54 and fixed to the lower end of the handle 8. To the bracket, a roller 52 is rotatably mounted, which is in contact with an actuating rod 53 protruded from the pump 4. By this construction, as the handle 8 is swung, the actuating rod 53 is reciprocated vertically, thereby causing the pump 4 to operate for pumping hydraulic oil from the tank 3.

Operation of the pallet lifter with the above-mentioned constructions according to the present invention will now be described in detail.

Loading of a pallet on which a load may be placed is carried out under the condition that the forks 47 and the support member 48 are maintained at their lowermost positions. Referring to FIG. 8, the forks 47 and the support member 48 are maintained at their upper positions. The operation for moving the forks 47 and the support member 48 to their lowermost positions shown in FIG. 8 will be described hereinafter. As the handle 8 is swung about the pivot 54 under the condition that a pallet carrying a load has been loaded on the forks 47, the roller 52 mounted to the lower end of the handle 8 functions to reciprocate vertically the actuating rod 53 of the pump 4, thereby causing the pump 4 to act its pumping operation. By the suction action of pump 4, the hydraulic oil in the tank 3 flows along the oil passage 61 and then the check valve 63 to enter the pumping chamber of the pump 4 through the oil passage 62. Subsequently, the hydraulic oil flows from the pumping chamber of the pump 4, via the oil passage 62 and the check valve 65, to the oil passage 64 which communicates with the hydraulic cylinder 5, by virtue of the delivery action of the pump. At this time, the hydraulic oil can not flow reversely toward the oil passage 61, by virtue of the function of the check valve 63. Thus, the hydraulic oil from the tank 3 is supplied to the hydraulic cylinder 5, according to the pumping action of the pump 4. The hydraulic oil entering the lower portion of the hydraulic cylinder 5 functions to lift the piston in the hydraulic cylinder 5, thereby causing the piston rod 5a to move upwardly. Accordingly, the forks 47 rise to a certain level by virtue of the force transmission accomplished by the sprocket wheel and the chain 49.

For transporting the pallet to a desired place, the lifter in which the forks 47 carrying a pallet is maintained at its lifted position is manually moved. In the case of a heavy pallet, very large initial wheel driving force is required. The initial wheel driving mechanism 2 of the present invention provides such initial wheel driving force. In order to operate the initial wheel driving mechanism 2, the first control mechanism 74 adapted to actuate the initial wheel driving mechanism 2 should be first actuated. The actuation of the first control mechanism 74 is accomplished by pulling up the lever 9 disposed at the upper portion of the handle 8. As the lever 9 is pulled up, the chain 76 is tensed, thereby causing the horizontal arm portion of the swing arm 78 to be lifted upwardly. Accordingly, the swing arm 78 rotates about the shaft 77. By the rotation of the swing arm 78, the adjustable contact member 79 of the vertical portion of the swing arm 78 contacts and pushes the actuating rod 80 inwardly of the hole 67, as shown the phantom line in FIG. 7, so that the inner end of the actuating rod 80 pushes the ball 69a against the spring force of the compression coil spring 69b, thereby enabling the fluid communication between the oil passage 64 communicating with the hydraulic cylinder 5 and the oil passage 73 communicating with the central oil passage 39 of the main shaft 11, via the oil passage 72. As a result, an oil path is formed which extends from the hydraulic cylinder 5 to the central oil passage 39 of the main shaft 11, via oil passages 64, 72, and 73. Since the hydraulic oil in the hydraulic cylinder is maintained under high pressure due to the heavy weight of the load on the forks 47 which is transmitted to the interior of the hydraulic cylinder via the piston rod 5a, it flows to the central oil passage 39 of the main shaft 11, along the oil path, as soon as the oil path is formed. The hydraulic oil passing through the central oil passage 39 then flows to the space defined between the inner surface of the bushing 17 and the end surface of the plunger 22, along an oil path which extends from the central oil passage 39, via the horizontal oil passage 40, the outer oil passage 41 and then the pipe 36, to the annular oil groove 15. The amount of oil supplied from the hydraulic cylinder 5 to the space is very small, since the hydraulic cylinder 5 has the inner diameter very larger than that of the bushing 17. Accordingly, lowering of the piston rod 5a caused by discharging hydraulic oil out of the hydraulic cylinder 5 is insignificant. The hydraulic oil under high pressure entering the space defined between the inner surface of the bushing 17 and the end surface of the plunger 22 pushes rearwardly the plunger 22 and thus the rack member 25 connected to the plunger 22 which have been maintained at their front positions shown in FIG. 1. The rearward movement of the rack member 25 causes the engagement between the rack 23 and the main gear 19, thereby causing the main gear 19 to rotate clockwise, when viewed in FIG. 1. By this rotation of the main gear 19, the wheels 1 mounted to the shaft 18 are rotated.

The rotation of wheels 1 is continued only until the rack member 25 reach to its rear position where the rear end surface of the rack member 25 is in contact with the inner surface of the cover 34' fitted in the rear end of the frame 12. By even this small rotation amount of wheels 1, sufficient initial wheel driving force can be obtained, thereby enabling the lifter to be moved easily to a desired place by using a manual force.

On the other hand, when the pulling of lever 9 is released, the actuating rod 80 and the ball 69a of the check valve 69 return to their original positions by spring forces of the compressed coil springs 81 and 69b, respectively, so that the oil path is shut off which extends from the hydraulic cylinder 5 to the central oil passage 39 of the main shaft 11, via oil passages 64, 72, and 73. At this time, the swing arm 78 also returns to its original position. Shutting off of the oil path results in releasing of the hydraulic pressure in the space defined between the inner surface of the bushing 17 and the end surface of the plunger 22, which has maintains the rack member 25 at its rear position against the spring forces of the torsion coil springs 33 and 33'. As a result, the return gear 21 engaging with the rack 24 of the rack member 25 rotates by the spring forces of the springs 33 and 33', thereby causing the rack member 25 to return to its original position shown in FIG. 1. During the return movement of the rack member 25. the rack 23 engages with the main gear 19, thereby causing it to rotate reversely, that is, anticlockwise, when viewed in FIG. 1. This rotation of the main gear 19 does not causes the rotation of wheels 1, since the shaft 18 to which the wheels 1 are fixedly mounted is coupled with the main gear 19, by means of the backstop bearings 26. Only the backstop bearings 26 idles by the rotation of main gear 19.

As the plunger 22 returns to its original position shown in FIG. 1, the hydraulic oil in the space defined between the bushing 17 and the plunger 22 flows into the tank 3, along an oil path which extends from the annular oil groove 15, via the pipe 35, the outer oil passage 41, the horizontal oil passage 40, the central oil passage 39, the oil passage 73, the oil passage 69' and then the oil passage 71.

When it is desired to move downwardly the forks 47 for unloading the load therefrom after the lifter has been manually moved to a desired place, the operator depresses the foot pedal of the swing arm 84 of the second control mechanism 75. Accordingly, the swing arm 84 rotates about the shaft 77. By the rotation of the swing arm 84, the adjustable contact member 85 of the vertical portion of the swing arm 84 contacts and pushes the actuating rod 86 inwardly of the hole 66, as shown the phantom line in FIG. 6, so that the inner end of the actuating rod 86 pushes the ball 68a against the spring force of the compression coil spring 68b, thereby enabling the fluid communication between the oil passage 64 communicating with the hydraulic cylinder 5 and the oil passage 71 communicating with the tank 3, via the oil passage 70. As a result, an oil path is formed which extends from the hydraulic cylinder 5 to the tank 3, via oil passages 64, 70, and 71. Since the hydraulic oil in the hydraulic cylinder is maintained under high pressure due to the heavy weight of the load on the forks 47 which is transmitted to the interior of the hydraulic cylinder via the piston rod 5a, it flows to the tank 3, along the oil path, as soon as the oil path is formed. Consequently, the piston rod 5a of the hydraulic cylinder 5 is lowered, thereby causing the forks 47 to move downwardly. When the force depressing the foot pedal of the swing arm 84 is released during the downward movement of the forks 47, the actuating rod 86 and the ball 68a of the check valve 68 return to their original positions by spring forces of the compressed coil springs 88 and 68b, respectively, so that the oil path is shut off which extends from the hydraulic cylinder 5 to the tank 3, via oil passages 64, 70, and 71. As the oil path is shut off, the piston rod 5a of the hydraulic cylinder 5 is lowered no longer, thereby causing the forks 47 to stop its downward movement. In this manner, the forks can be moved downwardly to a desired position where the load can be easily unloaded from the forks 47.

As apparent from the above description, the pallet lifter of the present invention comprises an initial wheel driving mechanism which can easily generate an initial wheel driving force so that a load which may be loaded on a pallet can be easily and simply carried to a desired place. Also, the pallet lifter is has a simple and compact construction, so that any person can use it easily, even at a confined place. Furthermore, there is no limitation in the place at which the pallet lifter is used.

Although the present invention has been shown and described with reference to the preferred embodiment thereof, and in terms of the illustrative drawings, it should not be considered as limited thereby. Various possible modifications, omissions, and alterations could be conceived of by one skilled in the art to the form and the content of any particular embodiment, without departing from the scope of the present invention. Therefore, it is desired that the scope of the present invention should be defined not by any of the perhaps purely fortuitous details of the illustrated preferred embodiment, or of the drawings.

## Claims

1. A pallet lifter comprising a base frame, forks supported to said base frame by means of a link mechanism to move vertically, and a pair of wheels rotatably mounted to the base frame, said lifter further comprising:
a tank containing hydraulic oil therein;
a hydraulic cylinder having a vertically reciprocating piston rod to move vertically said forks and communicating with said tank via a first oil path to be actuated by hydraulic pressure generated by the hydraulic oil supplied from the tank;
a pump disposed in said first oil path between the tank and said hydraulic cylinder and adapted to pump hydraulic oil from the tank to the hydraulic cylinder so as to move upwardly the forks;
means adapted to actuate said pump;
means adapted to release the hydraulic presure acting on the hydraulic cylinder so as to move downwardly the forks;
means adapted to apply an initial driving force to said wheels and actuated by hydraulic pressure generated by the hydraulic oil supplied from the hydraulic cylinder via a second oil path in which a first control valve normally maintained at its closed position is disposed;
means adapted to release the hydraulic pressure acting on said initial wheel driving means;
means adapted to control the operation of said initial wheel driving means by selectively opening said first control valve; and
means adapted to control the operation of the hydraulic cylinder.

2. A pallet lifter in accordance with Claim 1, wherein said means for releasing the hydraulic pressure acting on the hydraulic cylinder comprises a third oil path extending from the hydraulic cylinder to the tank and a second control valve which is normally maintained at its closed position and opened under the control of said means adapted to control the operation of the hydraulic cylinder.

3. A pallet lifter in accordance with Claim 1 or 2, wherein said means for releasing the hydraulic pressure acting on the initial wheel driving means comprises an oil path extending from the initial wheel driving means to the tank.

4. A pallet lifter in accordance with any of Claims 1 to 3, said initial wheel driving means comprises:
a frame having a vertical hollow upper portion supported to the base frame of the lifter and a horizontal hollow lower portion defining an inner space provided at one end with a bushing hole;
a bushing fitted in said bushing hole of the frame and formed at its outer surface with an annular oil groove communicating with the second oil path;
a main gear mounted to the middle portion of the shaft of the wheels within said inner space of the frame, said main gear rotating together with the wheel shaft only in its one rotating direction;
a return gear rotatably mounted to a separate shaft which is fixedly mounted at its both ends to both sides of the frame, within the inner space of the frame;
a rack member slidably disposed in the inner space of the frame and having a drive rack selectively engagable with said main gear and a return rack engaged with said return gear;
a plunger disposed in the bushing and connected with said rack member, said plunger being actuated by hydraulic pressure generated by the hydraulic oil supplied from the hydraulic cylinder via the second oil path and said annular oil groove of the bushing, so as to slide in the bushing and thus move the rack in the direction corresponding to said one rotating direction of the main gear and applying the initial driving force to the wheels; and
a pair of torsion coil springs arranged at both sides of said return gear and adapted to return the rack member by rotating reversely the return gear, in releasing of the hydraulic pressure acting on the plunger.

5. A pallet lifter in accordance with any of Claims 1 to 4, wherein said first and second control valves are check valves each comprising a ball and a compression coil spring urging said ball in the valve closing direction and disposed in a jack plate to which the tank, the pump and the hydraulic cylinder are supported.

6. A pallet lifter in accordance with any of Claims 1 to 5, wherein said means for controlling the operation of initial wheel driving means comprises:
an actuating rod slidably disposed in said jack plate such that its inner end faces to said ball of the first control valve to push it for opening the first control valve and its outer end is protruded beyond the support plate;
a swing arm rotatably mounted to a shaft fixedly mounted to the jack plate and having a substantially horizontal arm portion and a substantially vertical arm portion provided with a length adjustable contact member which contacts and pushes said protruded outer end of the actuating rod according to the rotation of swing arm;
a lever connected to said horizontal arm portion of the swing arm by means of a chain and adapted to rotate the swing arm in the direction of pushing the actuating rod; and
a return spring adapted to return the pushed actuating rod to its original position.

7. A pallet lifter in accordance with any of Claims 1 to 6, wherein said means for controlling the operation of hydraulic cylinder comprises:
an actuating rod slidably disposed in said jack plate such that its inner end faces to said ball of the second control valve to push it for opening the second control valve and its outer end is protruded beyond the support plate;
a swing arm rotatably mounted to a shaft fixedly mounted to the jack plate and having a substantially horizontal arm portion and a substantially vertical arm portion provided with a length adjustable contact member which contacts and pushes said protruded outer end of the actuating rod according to the rotation of swing arm;
a foot pedal connected to said horizontal arm portion of the swing arm and adapted to rotate the swing arm in the direction of pushing the actuating rod; and
a return spring adapted to return the pushed actuating rod to its original position.

8. A pallet lifter in accordance with any of Claims 1 to 7, wherein said means for actuating the pump comprises:
a handle pivotally mounted at its lower end to the tank by means of a bracket which is mounted to the outer wall of the tank to pivot about a pivot and fixed to the lower end of said handle; and
a roller rotatably mounted to said bracket such that it is in contact with an actuating rod protruded from the pump, whereby as the handle is swung, the actuating rod is reciprocated vertically by said roller, thereby causing the pump to operate for pumping hydraulic oil from the tank.

9. A pallet lifter in accordance with any of Claims 1 to 8, wherein said first, second and third oil paths are formed through said jacket plate.
